# EUROPÄISCHE PATENTSCHRIFT

(11) **EP 0 656 864 B1**
(45) Veröffentlichungstag und Bekanntmachung des Hinweises auf die Patenterteilung: **20.03.1996**
(21) Anmeldenummer: 93915695.6
(22) Anmeldetag: 06.08.1993
(51) Int. Cl.: B65G 37/02

(54) **FLEXIBLES TRANSPORTSYSTEM**
FLEXIBLE CONVEYOR SYSTEM
SYSTEME DE TRANSPORT SOUPLE

(30) Priorität: 01.09.1992 DE 4229067
(43) Veröffentlichungstag der Anmeldung: 14.06.1995
(73) Patentinhaber: ROBERT BOSCH GMBH, D-70442 Stuttgart (DE)
(72) Erfinder: MAIER, Gernot, D-70374 Stuttgart (DE); ERNE, Hans, D-71336 Waiblingen (DE); MUELLER, Ulrich, D-71404 Korb (DE)
(86) Internationale Anmeldenummer: DE9300704
(87) Internationale Veröffentlichungsnummer: WO9405571

(56) Entgegenhaltungen:
- EP-A- 0 013 733
- DE-A- 2 106 595
- DE-A- 3 514 716
- DE-A- 3 700 192
- DE-A- 4 006 486
- FR-A- 2 570 358

## Beschreibung

### Stand der Technik

Die Erfindung geht aus von einem flexiblen Transportsystem nach der Gattung des Hauptanspruchs. Eine derartiges flexibles Transportsystem geht aus der DE-OS 21 06 595 hervor, bei dem eine Vielzahl untereinander austauschbarer Module gleicher Länge in einer Längsreihe hintereinander angeordnet sind, wobei die Module jeweils eine Bearbeitungsstation bilden. Jeder Modul verfügt über eine Hin- und eine Rücktransportstrecke, auf der teiletragende Werkstückträger bewegbar sind. Einzelne Module der Anlage sind gegebenenfalls mit aus der Hintransportstrecke abzweigenden Nebenbahnabschnitten zum Ausschleusen von Werkstückträgern versehen. Ferner ist jeder Modul an den beiden Enden jeweils mit einem quer zu der Hin- und Rücktransportstrecke verlaufenden Transportbahnabschnitt versehen, so daß die Werkstückträger von der Hin- auf die Rückführstrecke und umgekehrt übergeben werden können, so daß sowohl innerhalb der Anlage als auch innerhalb eines Moduls jeweils eine umlaufende Transportbahn entsteht.

Aus der EP-A 115 357 ist ferner eine flexible Fertigungsanlage bekannt, bei der jeder Modul mit einer geraden, in Längsrichtung verlaufenden Transportbahnstrecke und gegebenenfalls mit einer oder mehreren parallelen und/oder rechtwinklig dazu verlaufenden Nebenbahnabschnitten versehen ist und bei der die Module entlang zweier beiderseits einer Längsebene parallel verlaufender Reihen angeordnet sind, wobei jeweils zwei sich gegenüberliegende Module ein Modulpaar bilden und alle Module untereinander austauschbar sind. Die Enden der beiden Haupttransportbahnen sind jeweils mittels eines einen quer verlaufenden Bahnabschnitt aufweisenden Anschlußmodul miteinander verbunden. Die bekannten modularen Transportsysteme haben den Nachteil, daß beim Austausch von Modulen stets der gesamte Werkstücktransfer stillgelegt werden muß.

### Vorteile der Erfindung

Das flexible Transportsystem mit den kennzeichnenden Merkmalen des Hauptanspruchs hat demgegenüber den Vorteil, daß die Basismodule komplett für den Werkstücktransfer vorbereitet sind und nur durch werkstückspezifische Einrichtungen zur Bearbeitung und/oder Montage der Werkstücke ergänzt werden müssen. Der mit den Basismodulen realisierbare Grundaufbau der Transferlinie ist für eine Vielzahl verschiedenster Fertigungs- und/oder Montageaufgaben verwendbar, wodurch sich Kostenvorteile bei der Planung, beim Aufbau und bei der Inbetriebnahme des flexiblen Transportsystems ergeben. Außerdem ist die An- und Abkopplung der Nebenschlußmodule bei laufender Produktion möglich.

Durch die in den Unteransprüchen aufgeführten Maßnahmen sind vorteilhafte Weiterbildungen und Verbesserungen des im Hauptanspruch angegebenen flexiblen Transportsystems möglich. Besonders vorteilhaft ist, daß insbesondere die Hin- und Rückführstrecke der Basismodule an den Ankoppelstellen für den Nebenschlußmodul mit vorbereiteten Aufnahmen für Übergabeeinheiten ausgerüstet sind. Damit muß nicht jeder Basismodul bei seiner Installation bereits für jede Quertransportbahn des Nebenschlußmoduls über eine Übergabeeinheit verfügen. Die Übergabeeinheit kann je nachdem, ob ein Nebenschlußmodul angekoppelt wird, schnell und einfach nachgerüstet werden.

### Zeichnung

Ein Ausführungsbeispiel der Erfindung ist in der Zeichnung dargestellt und in der nachfolgenden Beschreibung näher erläutert. Es zeigen Figur 1 eine Draufsicht auf ein Basismodul, Figur 2 eine Draufsicht auf ein Nebenschlußmodul und Figur 3 eine schematische Draufsicht auf ein aus Basis- und Nebenschlußmodulen aufgebautes flexibles Transportsystem.

### Beschreibung des Ausführungsbeispiels

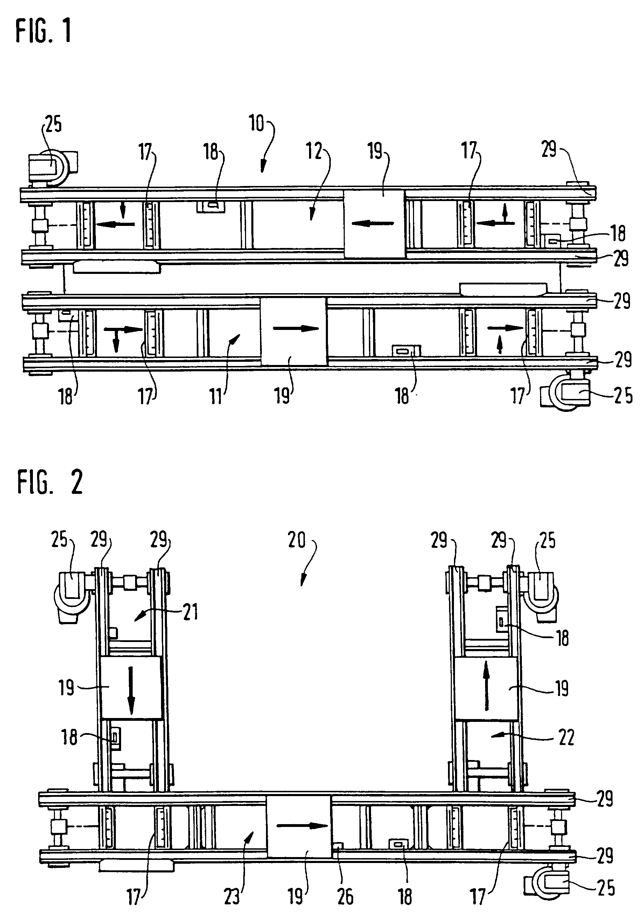

Das Basismodul 10 besteht gemäß Figur 1 aus zwei parallel zueinander verlaufenden Transportstrecken, von denen die eine eine Hintransportstrecke 11 und die andere eine Rücktransportstrecke 12 bildet. Im vorliegenden Ausführungsbeispiel sind die beiden Transportstrecken 11 und 12 als Doppelgurtförderer mit jeweils zwei Transportbändern 29 ausgebildet. Die Transportstrecken 11 und 12 besitzen jeweils einen eigenen Antrieb 25 für die Transportbänder 29 des Doppelgurtförderers, wobei die Transportrichtung gegenläufig verläuft. Die Transportbänder 29 tragen Werkstückträger 19, die mit Teilen bzw. mit Baugruppen bestückt sind. Das Basismodul 10 besitzt jeweils auf der Hintransportstrecke 11 und der Rücktransportstrecke 12 zwei Übergabeeinheiten 17. In Transportrichtung vor jeder Übergabeeinheit 17 ist jeweils ein Vereinzeler 18 positioniert, der die Werkstückträger 19 in den Bereich der Übergabeeinheit 17 nur freigibt, wenn die Übergabeeinheit 17 nicht bereits durch einen anderen Werkstückträger belegt ist.

Ein Nebenschlußmodul 20 gemäß Figur 2 besteht aus einer abführenden Quertransportbahn 21, einer zuführenden Quertransportbahn 22 und einem zwischen beiden Quertransportbahnen 21, 22 verlaufenden Nebenbahnabschnitt 23. Die Quertransportbahnen 21 und 22 sowie der Nebenbahnabschnitt 23 verfügen ebenfalls über eigene Antriebe 25. Die beiden Quertransportbahnen 21, 22 besitzen die gleiche Länge, so daß der Nebenbahnabschnitt 23 parallel zu den Transportstrecken 11 bzw. 12 des Basismoduls 10 verläuft, wenn das Nebenschlußmodul 20 an das Basismodul 10 angekoppelt ist. An den Kreuzungsstellen, an denen die abführende Quertransportbahn 21 in den Nebenbahnabschnitt 23 mündet sowie der Nebenbahnabschnitt 23 in die zuführende Quertransportbahn 22 abzweigt, sind im Nebenbahnabschnitt 23 Übergabeeinheiten 17 angeordnet. Das Nebenschlußmodul 20 verfügt ebenfalls in Transportrichtung vor jeder Übergabeeinheit 17 über jeweils einen Vereinzeler 18. Der Abstand der beiden Quertransportbahnen 21 und 22 ist so bemessen, daß er jeweils dem Abstand der beiden auf den Transportstrecken 11, 12 angeordneten Übergabeeinheiten 17 entspricht. Damit ist gewährleistet, daß die Nebenschlußmodule 20 an alle Basismodule 10 ankoppelbar sind. Die Nebenschlußmodule 20 werden so an die Basismodule 10 angekoppelt, daß die Quertransportbahnen 21, 22 rechtwinklig an den Transportstrecken 11 und 12 ansetzen.

Die Transportbänder 29 der Doppelgurtförderer des Basismoduls 10 und des Nebenschlußmoduls 20 sind jeweils auf ein nicht dargestelltes Gestell montiert, so daß die Transportbänder 29 in einer gemeinsamen Ebene liegen. Zum Aufbau des flexiblen Transportsystems wird entsprechend der Anzahl der erforderlichen Bearbeitungsstationen eine Anzahl von Basismodulen 10 in Längsrichtung hintereinander angeordnet. Im Bereich der Bearbeitungsstation bzw. des Handarbeitsplatzes ist am Nebenbahnabschnitt 23 eine Stoppeinrichtung 26 angeordnet, die den Werkstückträger 19 während der Bearbeitung in einer festen Position hält. Die Aneinanderreihung der Basismodule 10 sowie die Ankopplung der Nebenschlußmodule 20 erfolgt so, daß lediglich ein geringer Spalt zwischen den angrenzenden Transportbändern auftritt, so daß die Werkstückträger 19 ungehindert von den Transportstrecken 11 und 12 des einen Moduls auf die Transportstrecken 11 und 12 des angrenzenden Moduls sowie vom Basismodul 10 auf den oder die angrenzenden Nebenschlußmodule 20 überführt werden können. Zum Ankoppeln der Basismodule 10 untereinander ist zweckmäßigerweise an den beiden in Längsrichtung vorhandenen Enden eines jeden Moduls am Gestell jeweils eine Anbaufläche vorgesehen, durch die gleichzeitig ein Abstand zwischen zwei aneinandergrenzende Basismodule 10 eingestellt wird. Ferner sind zum Ankoppeln der Nebenschlußmodule 20 an die Basismodule 10 an den Gestellen beider Module weitere Anbauflächen vorgesehen, die die beiden Quertransportbahnen 21 und 22 an die jeweilige Transportstrecke 11 bzw. 12 positionieren.

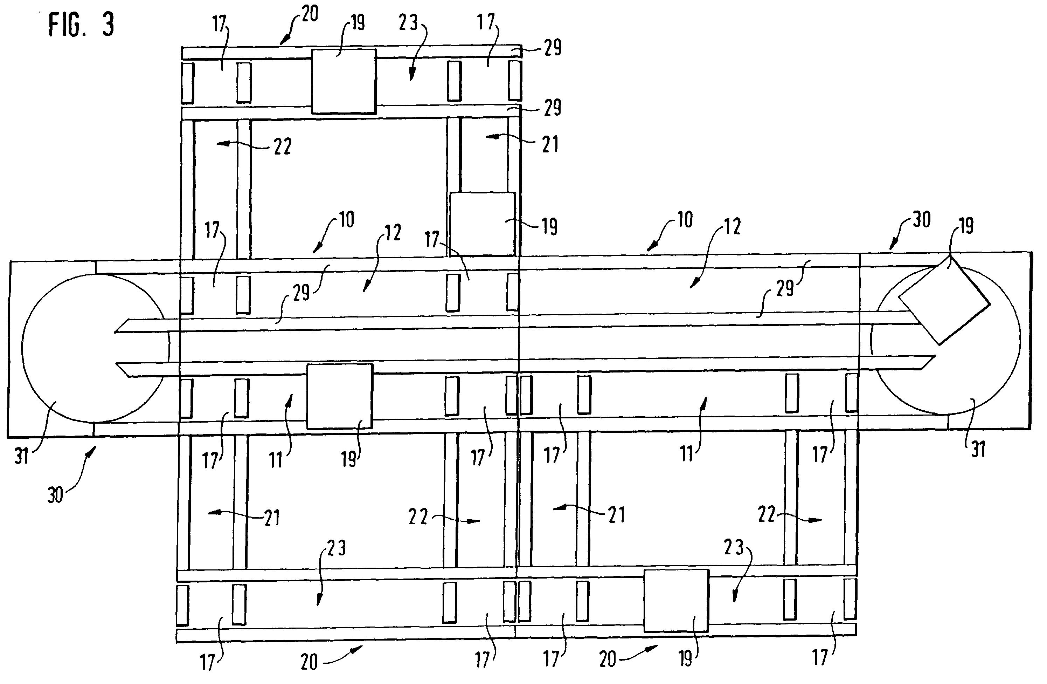

Ein Aufbau eines flexiblen Transportsystems geht aus Figur 3 hervor. Dort sind zwei Basismodule 10 hintereinander gekoppelt. An den beiden freien Enden der beiden Basismodule 10 ist jeweils eine Umlenkeinheit 30 angebracht, welche jeweils beispielsweise mit einer Drehscheibe 31 ausgeführt ist, mittels der die auf der Hintransportstrecke 11 ankommenden Werkstückträger auf die Rücktransportstrecke 12 und umgekehrt umgelenkt werden. Bei dem dargestellten Transportsystem ist am links in Figur 3 dargestellten Basismodul 10 sowohl an der Hintransportstrecke 11 als auch an der Rücktransportstrecke 12 jeweils ein Nebenschlußmodul 20 angekoppelt. Das zweite, in Figur 3 rechts dargestellte Basismodul 10 verfügt nur über ein an der Hintransportstrecke 11 angekoppeltes Nebenschlußmodul 20.

Die Transportbahnabschnitte 21, 22, 23 der Nebenschlußmodule 20 dienen gleichzeitig als Puffer für die auf den Werkstückträgern angebrachten Teile bzw. Baugruppen. In den Nebenbahnabschnitten 23 der Nebenschlußmodule 20 findet die Bearbeitung statt, wobei an diesen Stellen sowohl ein Handarbeitungsplatz als auch eine Automatikstation positioniert sein kann. Die nicht mit einem Nebenschlußmodul 20 versehene Transportstrecke 12 des in Figur 3 rechts dargestellten Basismoduls 10 kann als reine Transportbahn eingesetzt oder aber mit einer Bearbeitungsstation versehen werden, wobei der Arbeitstakt dieser Bearbeitungsstation den Transport der Werkstücke nicht behindern darf. Beispielsweise kann eine solche Transportbahn zum Auflegen von mit Teilen bzw. Baugruppen bestückten Werkstückträgern 19 benutzt werden.

Nach dem Auflegen des Werkstückträgers 19 auf die Rücktransportstrecke 12 des in Figur 3 rechts dargestellten Basismoduls 10 wird der Werkstückträger 19 von den Transportbändern 29 der Rücktransportstrecke 12 transportiert. Die Rücktransportstrecke 12 des rechten Basismoduls 10 besitzt beispielsweise keine Übergabeeinheiten. Der Werkstückträger 19 wird sodann von der Rücktransportstrecke 12 des rechts in Figur 3 angeordneten Basismoduls 10 auf die dahinter angeordnete Rücktransportstrecke 12 des links in Figur 3 positionierten Basismoduls 10 übergeben. Die dort vorgesehene Übergabeeinheit 17 ist von einer Steuerschaltung so gesteuert, daß bei Bedarf ein Werkstückträger 19 im Bereich der Übergabeeinheit 17 gestoppt und von ihr auf die abführende Quertransportbahn 21 des Nebenschlußmoduls 20 überführt wird. Von der Quertransportbahn 21 wird der Werkstückträger 19 übernommen und gemäß Figur 2 von einem vor dem Nebenbahnabschnitt 23 positionierten Vereinzeler 18 zurückgehalten. Der Vereinzeler 18 wird von der Steuerschaltung so getaktet, daß er einen Werkstückträger 19 dann freigibt, wenn die im Einmündungsbereich des Nebenbahnabschnitts 23 angeordnete Übergabeeinheit 17 zur Aufnahme eines Werkstückträgers 19 bereit ist. Von dieser Übergabeeinheit 17 wird dann der Werkstückträger 19 übernommen und auf den Nebenbahnabschnitt 23 gebracht. Im Bereich der nicht dargestellten Bearbeitungsstation bzw. des Handarbeitungsplatzes wird der Werkstückträger von der Stoppeinrichtung 26 (Figur 2) für die Dauer der Bearbeitung angehalten. Dabei ist es zweckmäßig, den Werkstückträger 19 mittels einer nicht dargestellten Hubeinheit von den Transportbändern 29 abzuheben. Nachdem die Bearbeitung beendet ist, wird der Werkstückträger 19 wieder auf die Transportbänder 29 gesetzt und in Richtung der zuführenden Quertransportbahn 22 weiterbewegt, wo er von der dort angeordneten Übergabeeinheit 17 auf die zuführende Quertransportbahn 22 übergeben wird.

Der Werkstückträger wird sodann in Richtung der auf der Rücktransportstrecke 12 positionierten zweiten Übergabeeinheit 17 des links in Figur 2 dargestellten Basismoduls 10 bewegt und von dieser auf die Transportbänder 29 der Rücktransportstrecke 12 gebracht. Aus dieser Position heraus erfolgt ein Weitertransport zu der links in Figur 3 dargestellten Umlenkeinheit 30, die den Werkstückträger 19 um 180° auf die Hintransportstrecke 11 des in Figur 3 links angeordneten Basismoduls 10 bringt. Dort wird der Werkstückträger 19 je nach dem, ob die Steuerschaltung ein Ausschleusen eines Werkstückträgers in den angrenzenden Nebenschlußmodul 20 aktiviert, entweder von der dort positionierten Übergabeeinheit 17 auf die abführende Quertransportbahn 21 dieses Nebenschlußmoduls 20 übergeben oder der Werkstückträger 19 setzt seine Fahrt entlang der Hintransportstrecke 11 fort.

Die bereits beim ersten Nebenschlußmodul beschrieben Prozedur der Übergabe bzw. Weiterleitung des Werkstückträgers 19 erfolgt in jedem der angekoppelten Nebenschlußmodule 20. Das in Figur 3 dargestellte flexible Transportsystem ist eine sehr vereinfachte Anordnung von Basismodulen 10 und Nebenschlußmodulen 20. Es versteht sich von selbst, daß das flexible Transportsystem mit mehr als der dort gezeigten Module ausführbar ist.

## Patentansprüche

1. Flexibles Transportsystem für eine oder mehrere Bearbeitungsstationen zum Montieren und/oder Bearbeiten von Teilen beziehungsweise Baugruppen, welches Transportmittel zum Transport von die Teile beziehungsweise Baugruppen aufnehmenden Werkstückträgern (19) aufweist und mit einer Hauptumlaufbahn und davon abzweigenden Nebenbahnabschnitten für die darauf umlaufenden Werkstückträger (19) ausgeführt ist, wobei eine Mehrzahl von in Längsrichtung hintereinander angeordneten Modulen gleicher Länge mit jeweils einer Hin- und Rücktransportstrecke einen Hauptumlaufbahnabschnitt bilden und jedes Modul mindestens eine Bearbeitungsstation aufzunehmen vermag, dadurch gekennzeichnet, daß Umlenkeinheiten (30) an den Enden der Hauptumlaufbahn angeordnet sind, daß jedes die Hinund Rücktransportstrecke (11, 12) aufweisende Modul ein Basismodul (10) bildet, daß die Nebenbahnabschnitte als Nebenschlußmodule (20) je mit zwei parallel nebeneinander und gegenläufige Transportrichtungen aufweisenden Quertransportbahnen (21, 22) und mit einer zwischen den Quertransportbahnen (21, 22) verlaufenden Nebenbahnstrecken (23) ausgeführt sind, und daß jedes Nebenschlußmodul (20) mindestens an eine der beiden Hin- und Rücktransportstrecken (11, 12) des Hauptumlaufbahnabschnitts eines Basismoduls (10) durch entsprechende Mittel ankoppelbar ist.

2. Flexibles Transportsystem nach Anspruch 1, dadurch gekennzeichnet, daß entlang der beiden Hauptumlaufbahnabschnitte (11, 12) jeweils zwei im Abstand der Quertransportbahnen (21, 22) angeordnete Anbauflächen zur Aufnahme von Übergabeeinheiten (17) zum Ein- bzw. Ausschleusen von Werkstückträgern (19) von der Hin- und Rücktransport- strecke (11, 12) auf die abführende Quertransportbahn (21) bzw. von der zuführenden Quertransportbahn (22) auf die Hin- und Rück- transportstrecke (11, 12) vorgesehen sind.

3. Flexibles Transportsystem nach Anspruch 2, dadurch gekennzeichnet, daß mindestens ein Basismodul (10) an den Aus- bzw. Einschleusstellen mit Übergabeeinheiten (17) bestückt ist.

4. Flexibles Transportsystem nach Anspruch 3, dadurch gekennzeichnet, daß die Übergabeeinheiten (17) Hub-Quereinheiten sind, welche den Werkstückträger (19) vom Transportmittel abheben bzw. auf das Transportmittel zurücksetzen und auf die angrenzende Transportbahn übersetzen.

5. Flexibles Transportsystem nach Anspruch 1, dadurch gekennzeichnet, daß die Hin- und Rücktransportstrecke (11, 12) jedes Basismoduls (10) und die Nebenbahnabschnitte (21 bis 23) jedes Nebenschlußmoduls (20) jeweils auf ein Gestell montiert sind, so daß die Transportmittel (29) beider Module (10, 20) in einer Ebene liegen.

6. Flexibles Transportsystem nach Anspruch 5, dadurch gekennzeichnet, daß das Gestell des Basismoduls (10) in Längsrichtung an beiden Enden jeweils mit Mitteln zum Ankoppeln eines weiteren Basismoduls (10) und quer zur Längsrichtung an beiden Seiten jeweils mit Mitteln zur Ankopplung jeweils eines Nebenschlußmoduls (20) versehen ist.

7. Flexibles Transportsystem nach Anspruch 6, dadurch gekennzeichnet, daß der Abstand der Transportmittel der angrenzenden Module von den jeweiligen Mitteln zum Ankoppeln der Module festgelegt ist.

8. Flexibles Transportsystem nach Anspruch 7, dadurch gekennzeichnet, daß der Abstand der angrenzenden Transportmittel so bemessen ist, daß die Werkstückträger (19) problemlos von einer Transportbahn auf die angrenzende Transportbahn übersetzen bzw. ein- und ausgeschleust werden können.

9. Flexibles Transportsystem nach einem der vorhergehenden Ansprüche, dadurch gekennzeichnet, daß die Basismodule (10) und die Nebenschlußmodule (20) jeweils untereinander austauschbar sind.

## Claims

1. Flexible conveyor system for one or more working stations for the fitting and/or working of parts or assemblies, which has conveyor means for the conveyance of workpiece carriers (19) receiving the parts or assemblies and is designed with a main circulatory track and off-branching branch segments for the workpiece carriers (19) circulating thereon, a plurality of equal-length modules disposed one behind the other in the longitudinal direction forming with a respective outbound and return section a main circulatory track segment and each module being capable of receiving at least one working station, characterized in that deflection units (30) are disposed at the ends of the main circulatory track, in that each module having the outbound and return conveyor section (11, 12) forms a basic module (10), in that the branch segments are designed as shunt modules (20) with, respectively, two transverse conveyor tracks (21, 22) having two mutually parallel and opposite-running transport directions and with a branch section (23) running between the transverse conveyor tracks (21, 22), and in that each shunt module (20) can be coupled by corresponding means to at least one of the two outbound and return conveyor sections (11, 12) of the main circulatory track segment of a basic module (10).

2. Flexible conveyor system according to Claim 1, characterized in that along the two main circulatory track segments (11, 12) there are respectively provided two mounting surfaces, disposed at a distance from the transverse conveyor tracks (21, 22), for the reception of transfer units (17) for the feed-in and feed-out of workpiece carriers (19) from the outbound and return conveyor section (11, 12) to the evacuating transverse conveyor track (21) and from the supplying transverse conveyor track (22) to the outbound and return conveyor section (11, 12) respectively.

3. Flexible conveyor system according to Claim 2, characterized in that at least one basic module (10) is equipped at the feed-in and feed-out points with transfer units (17).

4. Flexible conveyor system according to Claim 3, characterized in that the transfer units (17) are lifting-shunt units, which raise the workpiece carrier (19) from the conveyor means and return it to the conveyor means and shift it to the adjacent conveyor track.

5. Flexible conveyor system according to Claim 1, characterized in that the outbound and return conveyor section (11, 12) of each basic module (10) and the branch segments (21 to 23) of each shunt module (20) are respectively mounted on a stand, so that the conveyor means (29) of both modules (10, 20) lie in one plane.

6. Flexible conveyor system according to Claim 5, characterized in that the stand of the basic module (10) is provided in the longitudinal direction, at both ends, with respective means for the attachment of a further basic module (10) and transversely to the longitudinal direction, on both sides, with respective means for the attachment of a respective shunt module (20).

7. Flexible conveyor system according to Claim 6, characterized in that the distance of the conveyor means of the adjacent modules from the respective means for the attachment of the modules is fixed.

8. Flexible conveyor system according to Claim 7, characterized in that the spacing between the adjacent conveyor means is dimensioned such that the workpiece carriers (19) can shift or be fed in and out without difficulty from one conveyor track to the adjacent conveyor track.

9. Flexible conveyor system according to one of the preceding claims, characterized in that the basic module (10) and the shunt module (20) are respectively interchangeable.

## Revendications

1. Système de transport souple par un ou plusieurs postes de traitement servant au montage ou au traitement de pièces ou d'ensembles de construction, système qui, présente, pour le transport, les supports de pièces à oeuvrer (19), qui reçoivent les pièces ou les ensembles de construction et est réalisé au moyen d'une voie principale de circulation et de sections de voies auxiliaires montées en dérivation à partir de celle-ci pour les supports de pièces à oeuvrer (19) circulant dessus, une multiplicité de modules de même longueur, disposés les uns derrière les autres dans le sens de la longueur, constituant avec respectivement un tronçon de transport en avant et un tronçon de transport en arrière une section principale de voie de circulation et chaque module pouvant recevoir au moins un poste de traitement, système de transport souple caractérisé en ce que des unités de renvoi (30) sont disposées aux extrémités de la voie principale de circulation, en ce que chaque module qui présente le tronçon de transport en avant et en arrière (11, 12) constitue un module de base (10), en ce que les sections de voies auxiliaires sont constituées sous la forme de modules de dérivation (20) chacun avec deux voies de transport transversales (21, 22) présentant des directions de transport situées parallèlement côte à côte et en sens contraire et avec des tronçons de voies auxiliaires (23) s'étendant entre les voies de transport transversales (21, 22) et en ce que chaque module de dérivation (20) peut être couplé au moins à l'un des deux tronçons de transport en avant et en arrière (11, 12) de la section de voie principale de circulation d'un module de base (10) par des moyens adéquats.

2. Système de transport souple selon la revendication 1, caractérisé en ce que le long des deux sections de voie principale de circulation (11, 12), on prévoit respectivement deux surfaces de montage disposées à une certaine distance des voies de transport transversales (21, 22) pour recevoir les unités de transfert (17) servant à accueillir ou évacuer des supports de pièces à oeuvrer (19) du tronçon de transport en avant et en arrière (11, 12) sur la voie de transport transversale, qui s'en va (21) ou de la voie de transport transversale qui arrive (22) sur le tronçon de transport en avant et en arrière (11, 12).

3. Système de transport souple selon la revendication 2, caractérisé en ce qu'au moins un module de base (10) est garni aux endroits d'accueil ou d'évacuation d'unités de transfert (17).

4. Système de transport souple selon la revendication 3, caractérisé en ce que les unités de transfert (17) sont des unités transversales de levage, qui soulèvent le support de pièces à oeuvrer (19) du moyen de transport, ou le reposent sur le moyen de transport et le transbordent sur la voie de transport adjacente.

5. Système de transport souple selon la revendication 1, caractérisé en ce que le tronçon de transport en avant et en arrière (11, 12) de chaque module de base (10) et les sections de voie auxiliaire (21 à 23) de chaque module de dérivation (20) sont respectivement montés sur un bâti d'une manière telle que les moyens de transport (29) des deux modules (10, 20) se trouvent dans un plan.

6. Système de transport souple selon la revendication 5, caractérisé en ce que le bâti du module de base (10) est pourvu dans le sens longitudinal aux deux extrémités respectivement de moyens servant à accoupler un autre module de base (10) et perpendiculairement à la direction longitudinale des deux côtés respectivement de moyens servant à accoupler un module de dérivation (20).

7. Système de transport souple selon la revendication 6, caractérisé en ce que la distance des moyens de transport des modules adjacents est déterminée par les moyens correspondants servant à accoupler les modules.

8. Système de transport souple selon la revendication 7, caractérisé en ce que la distance des moyens de transport adjacents est dimensionnée d'une manière telle que les supports des pièces à oeuvrer (19) puissent être transbordés ou accueillis et évacués sans problème par une voie de transport sur la voie de transport adjacente.

9. Système de transport souple selon l'une des revendications précédentes, caractérisé en ce que les modules de base (10) et ces modules de dérivation (20) sont respectivement interchangeables.
